# EUROPÄISCHE PATENTSCHRIFT

(11) **EP 4 038 511 B1**
(45) Veröffentlichungstag und Bekanntmachung des Hinweises auf die Patenterteilung: **18.12.2024**
(21) Anmeldenummer: 20781515.0
(22) Anmeldetag: 29.09.2020
(51) Int. Cl.: G06F 13/40, H04L 12/40

(54) **EIN-/AUSGABE-EINHEIT ZUR DATENERFASSUNG BEI EINEM FELDBUSSYSTEM**
INPUT/OUTPUT UNIT FOR DATA CAPTURE IN A FIELD BUS SYSTEM
UNITÉ D'ENTRÉE/SORTIE POUR LA CAPTURE DE DONNÉES DANS UN SYSTÈME DE BUS DE TERRAIN

(30) Priorität: 02.10.2019 DE 102019126668
(43) Veröffentlichungstag der Anmeldung: 10.08.2022
(73) Patentinhaber: Phoenix Contact GmbH & Co. KG, 32825 Blomberg (DE)
(72) Erfinder: WESSLING, Klaus, 31675 Bückeburg Nordrhein-Westfalen (DE)
(74) Vertreter: LifeTech IP Spies & Behrndt Patentanwälte PartG mbB
(86) Internationale Anmeldenummer: PCT/EP2020/077202
(87) Internationale Veröffentlichungsnummer: WO 2021/063932

(56) Entgegenhaltungen:
- EP-A1- 1 873 597
- WO-A1-2013/184115
- WO-A1-2017/196875
- DE-A1- 10 302 799
- DE-A1- 102016 109 363
- DE-T2- 69 735 555
- ANONYMOUS: "Speicherdirektzugriff - Wikipedia", WIKIPEDIA, 22 June 2019 (2019-06-22), XP055747521, Retrieved from the Internet <URL:https://de.wikipedia.org/wiki/Speicherdirektzugriff> [retrieved on 20201105]

## Beschreibung

Die Erfindung betrifft eine Ein-/Ausgabe-Einheit zur Datenerfassung bei einem Feldbussystem. Dies schließt einen Gebrauch der Ein-/Ausgabe-Einheit zur Erfassung des Verlaufs eines Digitalsignals durch einen Mikrocontroller ein.

Solche Ein-/Ausgabe-Einheiten werden vielfältig im Feldbusbereich eingesetzt. Feldbussysteme werden in der Automatisierungstechnik, in der Prozess- und Verfahrenstechnik wie auch allgemein zur Steuerung von Maschinen- und Anlagen, inklusive Robotern, eingesetzt. Dort werden sie zur Messwerterfassung von Sensoren eingesetzt, wie auch zur Ausgabe von Schaltsignalen zur Steuerung von Anlagen. Insbesondere werden Feldbussysteme seit Langem eingesetzt, um die bis dahin übliche Parallelverdrahtung binärer Signale sowie die analoge Signalübertragung bei Sensoren durch digitale Übertragungstechnik zu ersetzen.

Die Ein-/Ausgabe-Einheiten im Feldbusbereich sind typischerweise mit Standard-Mikrocontroller ausgestattet, der sogenannte "General Purpose Ein- /Ausgänge (GPIO-Port) aufweist. Eine typische E/A-Anwendung besteht darin, dass z.B. der Zustand eines digitalen Einganges in sehr kurzen zeitlichen Abständen abgetastet werden muss, um die Digitaldaten einlesen zu können. Nicht immer können die Daten mit dem erforderlichen Zeitabstand der Abtastrate an die Steuerung des Feldbussystems über den Feldbus übertragen werden. Für diesen Fall ist eine Technik des "Oversampling" in Verbindung mit einer Paketisierung der Daten erforderlich. Ein Signal wird dabei in dem erforderlichen kurzen zeitlichen Abstand abgetastet, die Abtastwerte werden in einem Speicher zwischengespeichert und mit hoher Übertragungsrate paketweise und in größerem zeitlichen Abstand (abhängig vom überlagerten Feldbussystem und dessen Zugriffsbedingungen) zyklisch übertragen. In der Regel wird dafür der Zustand eines GPIO-Ports von der CPU des Mikrocontrollers "klassisch" abgetastet. Jedes Mal, wenn der Zeitpunkt zum Abtasten gekommen ist, wird der Zustand des Standard GPIO-Ports erfasst und so Zustand für Zustand (Bit für Bit) in einem Register zwischengespeichert. Hierbei sind "umständliche" Bit-Verschiebungsroutinen aufzurufen, um die einzelnen Zustände so anzusammeln, dass diese in Paketen verschickt werden können. Die Zeitpunkte des Abtastens werden in der Regel mit Hilfe eines Timer-Bausteins des Mikrocontrollers durch Erzeugung eines entsprechenden Taktsignales vorgegeben. Für bestimmte Bit- oder Wortverschiebe-Operationen werden ebenfalls Timer programmiert, die nach Ablauf der zuvor bestimmten Zeit einen Timer-Interrupt erzeugen, durch den die entsprechende Interrupt-Service Routinen (ISR) aufgerufen werden, die von der CPU abgearbeitet werden.

Das Dokument EP 1 873 597 A1 beschreibt ein Anschlussmodul zum Anschließen eines Sensors an einen Feldbus. Das Anschlussmodul umfasst wenigstens eine Sensorschnittstelle zum Verbinden des Anschlussmoduls mit einer Schnittstelle des Sensors, wenigstens einer Busschnittstelle zum Verbinden des Anschlussmoduls mit einer Schnittstelle eines Feldbusses und einer Schaltung zum Datenaustausch ausgestattet.

Das Dokument DE10 2016 109 363 A1 betrifft einen Host-Port für eine serielle, periphere Schnittstelle. Als serielle Schnittstelle wird die SPI-Schnittstelle eingesetzt.

Aus dem Dokument DE10 2014 209 625 A1 ist es bekannt, eine SPI-Schnittstelle bei einem Mikrocontroller einzusetzen, der auch mit Speicherdirektzugriff-Controller (DMA-Controller) ausgerüstet ist. Die Daten werden über die SPI-Schnittstelle unter Einsatz des DMA-Controllers zwischen Mikrocontroller und einem externen Speicher hin und her übertragen.

Aus dem Dokument US 2009 024 776 A1 ist ein Mikrocontroller bekannt, der ebenfalls mit SPI-Schnittstelle und DMA-Controller ausgestattet ist. Der DMA-Controller überträgt die von der SPI-Schnittstelle empfangenen Daten zum CPU-Kern.

Aus dem Übersichtsartikel zum Thema SPI und DMA-Transfer "Using DMA with High Performance Peripherals to Maximize System Performance" von John Mangino WW TMS470 Catalog Applications aus SPNA 105, Jan. 2007 ist ebenfalls der Einsatz von DMA-Controllern zur Entlastung der CPU bei Datenübertragungen über SPI-Schnittstellen bekannt. Dabei werden Daten, die von einer SPI-Schnittstelle empfangen werden, von dem externen DMA-Controller in einen Speicher geschrieben.

Die bekannten Lösungen haben allerdings den Nachteil, dass für die Transferierung der Daten von einer E/A-Einheit in den Arbeitsspeicher, Prozessorregister zur Zwischenspeicherung genutzt werden. Erst werden die Daten vom Prozessor in sein internes Register eingelesen, um dann in einem weiteren Schritt in den Arbeitsspeicher verschoben zu werden. Dafür sind über Timer-Bausteine ausgelöste Routinen abzuarbeiten, die viele Taktzyklen benötigen, in denen der Prozessor nicht für die Ausführung anderer Befehle zur Verfügung steht, und somit wird die Ausführungsgeschwindigkeit laufender Programme verringert. Bei den bekannten Lösungen, bei denen Daten von einer SPI-Schnittstelle per Speicherdirektzugriff in den Speicher transferiert werden, steht keine Ausgabe der Daten über den Feldbus in Betracht.

Es besteht deshalb der Bedarf für eine verbesserte Ein-/Ausgabe-Einheit für Feldbussysteme, die diese genannten Nachteile vermeidet. Dies wurde im Rahmen der Erfindung erkannt.

Diese Aufgabe wird durch eine Ein-/Ausgabe-Einheit zur Datenerfassung bei Feldbussystemen gemäß Anspruch 1 gelöst.

Die abhängigen Ansprüche beinhalten vorteilhafte Weiterbildungen und Verbesserungen der Erfindung entsprechend der nachfolgenden Beschreibung dieser Maßnahmen.

Die erfindungsgemäße Lösung besteht in einer Ein-/Ausgabe-Einheit zur Datenerfassung bei einem Feldbussystem gemäß Anspruch 1.

Die Ein-/Ausgabe-Einheit umfasst einen Mikrocontroller (beispielsweise einen Standard-Mikrocontroller), der wenigstens eine integrierte synchrone, serielle Busschnittstelle und eine Steuereinheit für einen Speicherdirektzugriff aufweist. Die Lösung zeichnet sich dadurch aus, dass an einen Dateneingang einer ersten synchronen, seriellen Busschnittstelle der wenigstens einen synchronen, seriellen Busschnittstelle eine Signalquelle für ein Digitalsignal anschließbar ist, und dass die erste synchrone, serielle Busschnittstelle die an dem Dateneingang anstehenden Daten mit einer ersten Taktrate einliest. Die erste Taktrate zum Einlesen der Daten entspricht der Datenübertragungsrate der ersten synchronen, seriellen Busschnittstelle.

Das Sammeln und Anordnen der einzelnen Zustände (Bit für Bit) zu Datenpaketen ist so wesentlich einfacher zu realisieren, weil die Bit-Verschiebungsroutinen überflüssig werden und dafür Timer-Interrupts entfallen.

Weiterhin besteht die Lösung darin, dass die Steuereinheit für den Speicherdirektzugriff die eingelesenen Datensignale als Datenworte an einen Zwischenspeicher weiterleitet, und von Zeit zu Zeit von dem Zwischenspeicher abholt, und an eine zweite synchrone, serielle Schnittstelle oder eine andere Busschnittstelle weiterleitet, wobei die zweite synchrone, serielle Schnittstelle oder die andere Busschnittstelle an eine Feldbus-Schnittstelle angeschlossen ist, und die Datenworte mit einer höheren Taktrate als die erste Taktrate bei der Datenerfassung durch die erste synchrone, serielle Busschnittstelle ausgibt.

Die Lösung bietet den Vorteil, dass zur Erfassung der Daten an dem Digitaleingang und zur Paketisierung und Weiterleitung der Daten über den Feldbus keine CPU-lastigen Routinen aufgerufen werden müssen. Die CPU ist von dem Datenerfassungs- und Weiterleitungsvorgang befreit und kann andere Aufgaben wahrnehmen. Auch könnte ein Mikrocontroller mit weniger leistungsfähiger CPU eingesetzt werden, wodurch die E/A-Einheit kostengünstiger wird.

Eine vorteilhafte weitere Maßnahme besteht darin, dass die Datenworte von dem Zwischenspeicher paketweise abgeholt werden. Der DMA-Controller kann entsprechend programmiert werden, so dass dafür ebenfalls keine Routinen von der CPU abgearbeitet werden müssen

Die Erfindung kann besonders vorteilhaft mit Mikrocontrollern realisiert werden, bei denen die wenigstens zwei synchronen, seriellen Schnittstellen von dem Typ einer SPI-Schnittstelle sind, entsprechend Serial Peripheral Interface. Diese Schnittstelle ist sehr verbreitet und wird häufig in Mikrocontrollern eingesetzt.

In einer bevorzugten Variante wird die Ein-/Ausgabe-Einheit so gestaltet, dass der Dateneingang an den MISO-Eingang, entsprechend Master In, Slave Out der ersten SPI-Schnittstelle angeschlossen ist und die Ausgänge SCLK, MOSI und CS, entsprechend Serial Clock, Master Out, Slave In und Chip Select der ersten SPI-Schnittstelle nicht angeschlossen sind oder an Masse gelegt sind. Die erste SPI-Schnittstelle wird so unkonventionell als Master betrieben, wobei sie allerdings nicht mit weiteren Chips verbunden ist, die ebenfalls SPI-Schnittstellen beinhalten.

Sehr vorteilhaft ist es noch, dass die Ein-/Ausgabe-Einheit so programmiert wird, dass die zweite Taktrate wenigstens um solch einen Faktor höher als die erste Taktrate ist, dass sie einem Vielfachen der Taktrate der ersten Taktrate entspricht, wobei das Vielfache durch die Wortlänge der Datenworte bestimmt ist. Diese Maßnahme garantiert, dass die erfassten Daten paketweise über den Feldbus übertragen werden können.

Bei einer erweiterten Ausführungsform wird das Chip-Select-Signal statt an Masse gelegt oder nicht angeschlossen, an eine oder mehrere weitere SPI-Schnittstellen angeschlossen und damit wird eine oder mehrere weitere SPI-Schnittstellen aus einer Anzahl von SPI-Schnittstellen ausgewählt, bei denen die an dem Dateneingang (MISO) anstehenden Daten mit der ersten Taktrate eingelesen und an den Zwischenspeicher weitergeleitet werden. So können mehrere Digitaleingänge auf die gleiche Art erfasst werden und über den Feldbus ausgegeben werden.

Bei einer vorteilhaften Ausführungsform weisen die von der Ein-/Ausgabe-Einheit erzeugten Datenpakete ein Übertragungsformat auf mit einem Kopfteil, HD, einem Transportteildatenfeld, TF, und mit einem Nutzdatenfeld, PL, wobei in dem Kopfteil Adressinformationen enthalten sind, in dem Transportteildatenfeld eine Sequenznummer und/oder ein Zeitstempel und in dem Nutzdatenfeld eine Anzahl der in dem Datenpaket zusammengestellten Datenworte. Dies ermöglicht es, die chronologische Reihenfolge der Datenpakete für die Erfassung des digitalen Signales in der überlagerten Steuerung einfach zurückzugewinnen. Die Datenpakete werden einzeln nummeriert. Dabei wird die Paketnummer als Sequenznummer vergeben und wird damit mit jedem neuen Datenpaket, das zur Feldbus-Schnittstelle übertragen wird, inkrementiert.

Weitere vorteilhafte Varianten betreffen eine Ein-/Ausgabe-Einheit, wobei die andere Busschnittstelle eine Busschnittstelle vom Typ einer UART, USART, I2C oder USB-Schnittstelle ist. Diese sind bei einigen Standard-Mikrocontrollern bereits mitintegriert.

Eine Ausgestaltung der erfindungsgemäßen Ein-/Ausgabe-Einheit kann zur Erfassung des Verlaufs eines Digitalsignals durch einen Mikrocontroller, der wenigstens eine integrierte synchrone, serielle Busschnittstelle mit Vollduplexfunktionalität aufweist, gebraucht werden. Bei dem Gebrauch der Ein-/Ausgabe-Einheit wird von dem Mikrocontroller ein an einem digitalen Dateneingang einer ersten synchronen, seriellen Busschnittstelle der wenigstens einen integrierten synchronen, seriellen Busschnittstelle anstehendes Digitalsignal mit einer Taktrate eingelesen, die einer Datenübertragungsrate der ersten synchronen, seriellen Busschnittstelle entspricht. Die wenigstens eine synchrone, serielle Busschnittstelle ist von einem Typ einer SPI-Schnittstelle, entsprechend Serial Peripheral Interface.

Dabei besteht eine Besonderheit darin, dass die Datenausgänge der synchronen, seriellen Busschnittstelle, die sonst für die Realisierung des Vollduplexbetriebs mit der Signalquelle, an die der Dateneingang angeschlossen ist, verbunden werden, nicht zum Aufbau einer Vollduplexverbindung mit der Signalquelle verbunden werden. So kann die Erfassung des Digitalsignals sehr Prozessor-schonend erfolgen.

Dabei wird die integrierte synchrone, serielle Busschnittstelle vorzugsweise in einem Master-Betriebsmode betrieben, bei dem sie den Takt für das Einlesen des Digitalsignals selbst vorgibt. Ist die Taktrate hoch genug, kann das Digitalsignal mit entsprechend guter Auflösung erfasst werden.

Der Mikrocontroller mit wenigstens einer integrierten synchronen, seriellen Busschnittstelle mit Vollduplexfunktionalität kann sich dadurch auszeichnen, dass der Mikrocontroller angepasst ist, die Funktion der erfindungsgemäßen Ein-/Ausgabe-Einheit auszuführen. Die Anpassung des Mikrocontrollers geschieht einerseits durch entsprechende Beschaltung der Ein- und Ausgänge der integrierten synchronen, seriellen Schnittstelle sowie durch Software, bei der die Datenausgänge der integrierten synchronen, seriellen Schnittstelle nicht betrieben werden.

Mehrere Ausführungsbeispiele der Erfindung sind in den Zeichnungen dargestellt und werden nachfolgend anhand der Figuren näher erläutert.

Es zeigen:
- Fig. 1: ein Feldbussystem mit den beiden Komponenten E/A-Einheit und Steuerung;
- Fig. 2: ein Blockschaltbild eines Standard-Mikrocontrollers, der in elektronischen Komponenten für Feldbussysteme eingesetzt werden kann;
- Fig. 3: ein erstes Blockschaltbild mit einer E/A-Einheit, bei der ein Standard-Mikrocontroller in einer ersten erfindungsgemäßen Weise eingesetzt wird;
- Fig. 4: zeigt ein Signaldiagramm, mit dem die "Oversampling"-Technik beim Einlesen eines Digitalsignals veranschaulicht wird;
- Fig. 5: den Datenübertragungsvorgang bei der Ausgabe des eingelesenen Digitalsignals von der zweiten Busschnittstelle zu einer Feldbus-Schnittstelle; und
- Fig. 6: ein zweites Blockschaltbild mit einer E/A-Einheit, bei der ein Standard-Mikrocontroller in einer zweiten erfindungsgemäßen Weise eingesetzt wird.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

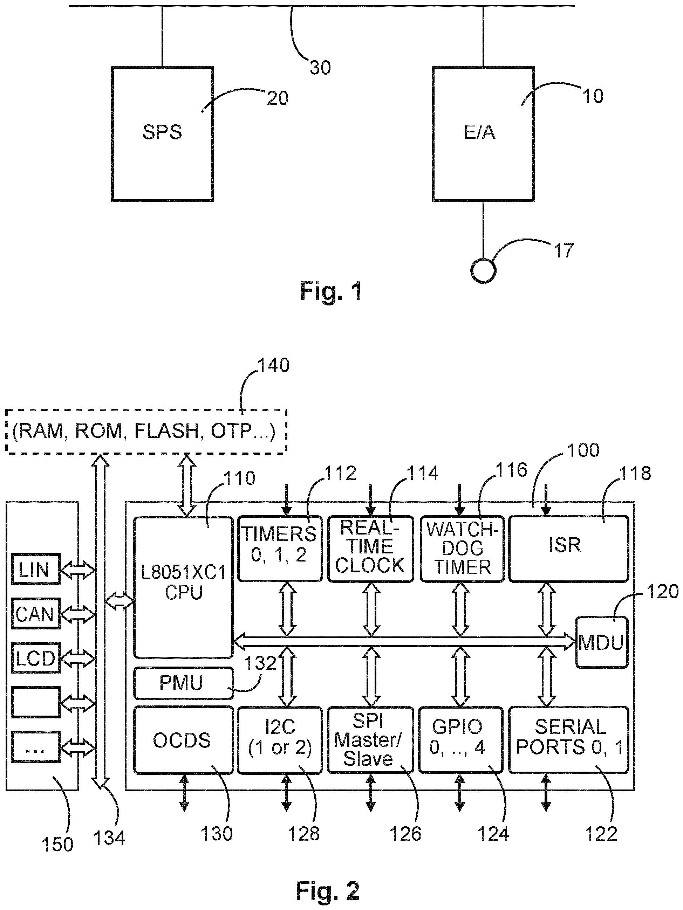

Fig. 1 zeigt ein einfaches Feldbussystem mit nur zwei Komponenten. Die Bezugszahl 10 bezeichnet eine Ein-/Ausgabe-Einheit (E/A-Einheit). Mit den Bezugszahlen 20, 30 sind eine Steuerung und der Feldbus selber bezeichnet. Die E/A-Einheiten werden vielfältig eingesetzt und dienen dazu, Messwerte zu erfassen. Oft werden Sensor-Signale erfasst. Mit der Bezugszahl 17 ist ein Sensor bezeichnet. Es können verschiedene Arten von Sensoren eingesetzt werden, die im Automatisierungsbereich, der Prozess- und Verfahrenstechnik oder bei sonstiger Maschinensteuerung eingesetzt werden. Dazu zählen Drehzahlsensoren, Temperatursensoren, Lichtsensoren, Infrarotsensoren, Berührungssensoren, Mikrofone, Kameras usw., die Aufzählung ist nicht abschließend. Das Prinzip von Feldbussystemen besteht darin, dass die Messwerterfassung durch die E/A-Einheit Vorort bei den verschiedenen Sensoren der Maschine oder Anlage geschieht, die Steuerung der Maschine oder Anlage jedoch in der Steuerungseinheit 20, z.B. SPS-Steuerung, die zentral angeordnet ist, geschieht. Über den Feldbus 30 werden die E/A-Daten zu der Steuerungseinheit 20 übertragen. Als Feldbus kommen die verschiedenen bekannten Feldbusvarianten in Betracht. Beispiele von Feldbussystemen sind Interbus, Profibus, Profinet, Ethernet, EtherCAT, CAN-Bus, HART usw.

Neben E/A-Einheiten, die für die Erfassung von Sensor-Signalen eingesetzt werden, kommen auch E/A-Einheiten zum Einsatz, an die Steuersignale gesendet werden, die dann bestimmte Aktoren schalten. Beispiele sind, Stellglieder, Pumpen, Ventile, Elektromotoren usw.

Es existieren Anwendungen für E/A-Einheiten, bei denen Signale, z.B. der Zustand eines digitalen oder analogen Eingangssignals, in sehr kurzen zeitlichen Abständen abgetastet werden müssen. Dafür werden in den E/A-Einheiten oft Standard-Mikrocontroller eingesetzt, die sogenannte General Purpose Ein/Ausgänge (GPIO) aufweisen. Damit ist die periodische Erfassung/Ausgabe von Digital- oder Analogsignalen möglich. Wegen des erhöhten Verkehrsaufkommens auf dem angeschlossenen Feldbus 30, auf dem vielfältige andere Daten ebenfalls übertragen werden, mit entsprechenden Buszuteilungskonflikten, ist es nicht immer möglich, die eingelesen Daten in gleicher Weise mit dem erforderlichen Zeitabstand entsprechend der gewünschten Abtastrate beim Einlesen der Daten an die Steuerung zu übertragen. Für diesen Fall wird die Technik des sogenannten "Oversampling" eingesetzt, die allerdings nicht verwechselt werden sollte mit der gleichnamigen Technik bei der A/D-Wandlung oder D/A-Wandlung. Ein Signal wird dabei in dem erforderlichen kurzen zeitlichen Abstand abgetastet, wie es die Steuerung benötigt. Die Daten werden zwischengespeichert und mit hoher Übertragungsrate blockweise, dafür aber in größerem zeitlichen Abstand (abhängig vom überlagerten Feldbussystem) zyklisch übertragen. Bei der Steuerung kommen also immer blockweise Daten an. Werden die schneller übertragenen Daten wieder in das nötige Zeitraster zurückversetzt, liegen die Daten dann in der Steuerung wieder so vor, wie sie in der E/A-Einheit eingelesen wurden.

Die Fig. 2 zeigt ein Blockschaltbild eines derartigen Standard-Mikrocontrollers. Es handelt sich um den Mikrocontroller des Typs L8051XC1 der Firma Intel. Der Mikrocontroller ist mit der Bezugszahl 100 bezeichnet. Er beinhaltet die folgenden Komponenten: CPU 110, Timer-Baustein 112, Echtzeituhr 114, Überwachungsschaltkreis 116, Interrupt-Controller 118, Co-Prozessor 120, serielle Schnittstelle 122, Universal-E/A-Einheit 124, SPI-Schnittstelle 126, I2C-Schnittstelle 128, Debugging-Einheit 130, und Spannungsversorgungseinheit 132. Die Funktionsweise beim Einlesen von digitalen Daten ist wie folgt.

In der Regel wird dafür der Zustand eines digitalen Einganges, z.B. eines der GPIO-Eingänge, "klassisch" abgetastet. Jedes Mal, wenn der Zeitpunkt zum Abtasten gekommen ist, wird der Zustand eines Standard GPIO-Eingangs 124 erfasst und so Zustand für Zustand (Bit für Bit) in einem Pufferspeicher zwischengespeichert. In Fig. 2 ist der Zwischenspeicher in dem extern angeschlossenen Speicherbaustein 140 allokiert. Es könnte alternativ aber auch ein interner Zwischenspeicher vorgesehen sein. In beiden Fällen sind allerdings "umständliche" Bit-Verschiebungsroutinen seitens der CPU 110 aufzurufen, um die einzelnen Bit-Zustände so abzuspeichern, dass diese in Blöcken gesammelt verschickt werden können. Die Zeitpunkte des Abtastens des gewünschten GPIO-Eingangs 124 werden in der Regel durch den Timer-Baustein 112 des Mikrocontrollers 100 vorgegeben, derart, dass nach Ablauf einer zuvor bestimmten Zeit ein Timer-Interrupt die entsprechende Routine/Routinen aufruft. Das Gleiche ist auch erforderlich beim Auslesen der Daten aus dem Zwichenspeicher. Die CPU 110 muss die Daten zu Datenpaketen zusammenstellen, die dann über den externen Bus 134 zu der Feldbus-Schnittstelle 150 übertragen werden. Auch hier müssen die entsprechenden Routinen zum Lesen der Daten aus dem Speicher-Baustein 140 und Anordnen zu Datenpaketen aufgerufen werden. Dadurch wird allerdings die CPU 110 ebenfalls belastet.

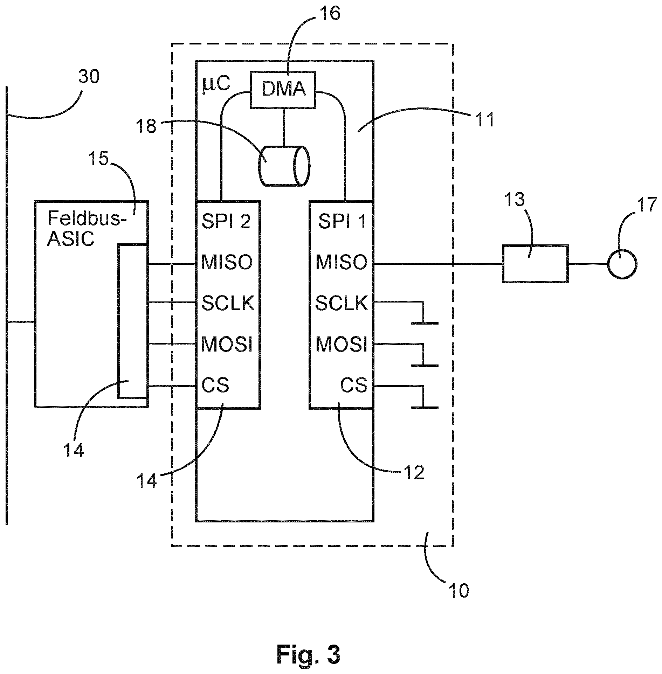

Die Fig. 3 zeigt ein erstes Ausführungsbeispiel der erfindungsgemäßen Lösung wie eine CPU-schonende E/A-Operation mit einem Standard-Mikrocontroller erfolgen kann. Gezeigt ist in Fig. 3 ein anderer Standard-Mikrocontroller 11. Dieser kann z.B. von dem folgenden kommerziell erhältlichen Typ Cortex Mx sein, mit x als eine natürliche Zahl [0, 1, 2, ...]. Als Beispiel werden die kommerziell erhältlichen Mikrocontroller des Typs STM32T103xC, -xD oder -xE des Hersteller STMicroelectronics genannt. Der Mikrocontroller ist mit internem Speicher ausgestattet, wo auch der Zwischenspeicher 18 allokiert werden kann. Die Bezugszahl 12 bezeichnet eine erste SPI-Schnittstelle und die Bezugszahl 14 eine zweite SPI-Schnittstelle. Die CPU-schonende E/A-Operation ist möglich, indem man die SPI-Schnittstellen 12, 14 für den E/A-Vorgang einsetzt. Die SPI-Schnittstellen 12, 14 entsprechen einem Peripheriebaustein des heute standardisierten SPI-Busses, der in den meisten Mikrocontrollern z.T. doppelt oder dreifach vorhanden ist. Dieser Peripheriebaustein wird dabei allerdings anders verwendet als vorgesehen. Im Sinne seiner ursprünglichen vorgesehenen Arbeitsweise werden keine plausiblen Daten erzeugt. Es kann mit der hier beschriebenen Idee aber das erforderliche Oversampling auf einfache Art und Weise realisiert werden. Voraussetzung ist, dass der Standard-Mikrocontroller wenigstens eine SPI-Schnittstelle aufweist. Im dargestellten Beispiel weist er zwei SPI-Schnittstellen auf.

Die SPI-Schnittstelle (Serial Peripheral Interface) wurde standardisiert. Es handelt sich um einen synchronen, seriellen Datenbus, mit dem digitale Schaltungen nach dem Master-Slave-Prinzip miteinander verbunden werden können. Weitere Einzelheiten zu der SPI-Schnittstelle sind aus dem US-Patent US 4 816 996 bekannt, auf das ausdrücklich in Bezug auf die ausführliche Offenbarung Bezug genommen wird.

Es gibt drei gemeinsame Leitungen, an die jeder Teilnehmer angeschlossen ist:
1. SCLK (Serial Clock), dieser Takt wird vom Master zur Synchronisation ausgegeben
2. MOSI (Master Output, Slave Input), beim Betrieb als Master ist es ein Ausgang, beim Betrieb als Slave ist es ein Eingang.
3. MISO (Master Input, Slave Output), beim Betrieb als Master ist es ein Eingang, beim Betrieb als Slave ist es ein Ausgang.

Zusätzlich kann es eine vierte gemeinsame Leitung geben. Das sogenannte Chip-Select-Signal.

### 4. CS (Chip Select)

In einem Multi-Slave System kann der SPI-Master über das CS-Signal einen Slave auswählen. Ein Chip-Select-Signal wird für das eigentliche "Oversampling" eines digitalen Einganges nicht benötigt.

Es ist aber auch möglich, mit diesem Signal bestimmte Prozesse im SPI-Slave zu "triggern", so dass zu Beginn der Datenübertragung, also zu dem Zeitpunkt, wo das Serial Clock Signal anfängt zu Takten, bereits verwertbare Daten zur Verfügung stehen.

Alternativ kann dieses Signal auch so verwendet werden, dass bei einer E/A-Einheit, welche über mehrere digitale Eingänge verfügt, über das Chip-Select-Signal, z.B. "Einer aus Acht" Digital-Eingängen ausgewählt wird, an dem ein "Oversampling" stattfinden soll. Alternativ ließen sich so auch eben je nach "Performance" des Mikrocontrollers "2 aus 8", "3 aus 8" usw. digitale Eingänge auswählen, bei denen die Technik des "Oversampling" eingesetzt wird.

Die erste SPI-Schnittstelle 12 wird zum Einlesen der Daten benutzt. Diese SPI-Schnittstelle 12 wird im SPI-Master Modus betrieben. Die Signale auf den Ein-/Ausgängen SCLK und MOSI (Master Out, Slave In) laufen dabei "ins Leere". Im gezeigten Fall sind sie einfach nach Masse verbunden. Lediglich der Ein-/Ausgang MISO (Master In, Slave Out) wird mit einer Signalquelle 17 (ein Sensor, der ein Digitalsignal ausgibt) verbunden. Er dient so als "Digitaleingang". Die Daten, die jetzt von der im SPI-Master-Mode arbeitenden SPI-Schnittstelle 12 eingelesen werden, sind die Zustände der digitalen Signalquelle 17 nach Pegelanpassung, die mit einer entsprechenden Pegelanpassungsschaltung 13 erfolgte. Die Daten werden mit der Abtastrate, die der Datenübertragungsrate des SPI-Masters 12 entspricht, abgetastet und eingelesen. Es können verschiedene SCLK-Frequenzen programmiert werden. Der Frequenzbereich, der bei einer konventionellen SPI-Schnittstelle eingestellt werden kann, liegt zwischen mehreren kHz bis einigen MHz. Diese Daten werden über die zweite SPI-Schnittstelle 14 an die Feldbus-Schnittstelle 15 weitergeleitet. Dazu beinhaltet der Baustein für die Feldbus-Schnittstelle 15 ebenfalls eine SPI-Schnittstelle 14.

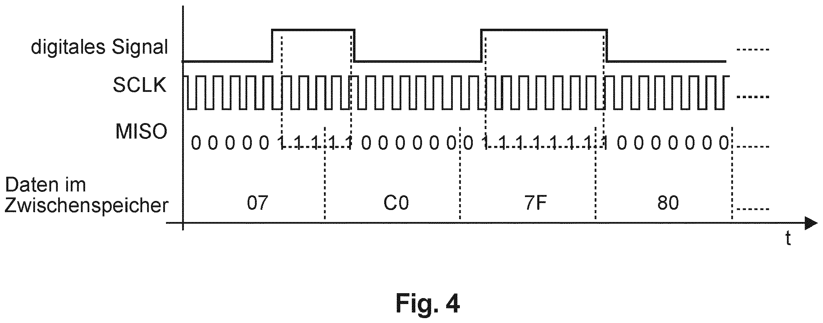

Die "Oversampling"-Technik wird jetzt noch mit Hilfe der Fig. 4 genauer erläutert. Das dort gezeigte Digitalsignal in der oberen Zeile wird von der Signalquelle 17 ausgegeben. Typische Beispiele solcher Signalquellen sind Sensoren, die ein digitales Ausgangssignal erzeugen. Es kann sich z.B. um eine Lichtschranke handeln. Dieses Digitalsignal soll erfasst werden. Dies erfolgt mit der SPI-Schnittstelle 12. Diese wird im Master-Mode betrieben und es wird eine Taktfrequenz eingestellt, die hoch genug ist, um eine Überabtastung des Digitalsignals durchführen zu können. Das SCLK-Taktsignal SCLK, mit dem abgetastet wird, ist in der Fig. 4 in der mittleren Zeile dargestellt. In der Zeile darunter sind die Abtastwerte angegeben. Es werden jeweils 8 Abtastwerte zu einem Datenwort zusammengefasst. Die Datenworte sind in der untersten Zeile in hexadezimaler Schreibweise angegeben. Konventionell würde ein Abtastvorgang reichen, um den jeweiligen Digitalzustand einzulesen. Beim "Oversampling" wird jeder Digitalzustand mehrfach eingelesen.

Das Sammeln und Anordnen der einzelnen eingelesenen Bitzustände (Bit für Bit) zu Datenworten ist so wesentlich einfacher zu realisieren, weil die Bit-Verschiebungsroutinen überflüssig werden und die dafür nötigen Timer-Interrupts entfallen, durch die die CPU 110 belastet wird. Das Abholen der Datenworte von der SPI-Schnittstelle 12 geschieht unter Einsatz eines auf dem Chip des Mikrocontrollers 11 befindlichen DMA-Bausteins 16. Dieser kann die Daten in den Zwischenspeicher 18 schreiben, ohne Beteiligung der CPU (nicht dargestellt).

Über die zweite SPI-Schnittstelle 14 werden die Daten an die daran angeschlossene Feldbus-Schnittstelle 15 ausgegeben. Der DMA-Baustein 16 wird dazu so programmiert, dass er die Daten von dem Zwischenspeicher 18 gleich in der richtigen Paketgröße abholt und an die zweite SPI-Schnittstelle 14 ausgibt. Dabei wird die zweite SPI-Schnittstelle 14 so programmiert, dass sie die abgeholten Datenpakete mit einer schnelleren Datenrate, also einer höheren SCLK-Taktrate, zeitlich organisiert zu der Feldbus-Schnittstelle 15 überträgt. Die CPU wird dadurch beträchtlich entlastet und kann die Rechenleistung für andere Aufgaben zur Verfügung stellen, weil die SPI-Bausteine 12, 14 und der DMA-Controller 16 im Hintergrund arbeiten. Dabei ist es von Vorteil, wenn zusätzlich zu den eingelesenen Datenworten auch Management-Daten, welche Feldbusabhängig sind, mitübertragen werden. Um die chronologische Reihenfolge der Datenpakete des digitalen Signales in der überlagerten Steuerung 20 einfach zu kontrollieren, kann man einen Zeitstempel oder eine Paketnummer hinzufügen. Die Paketnummer wird als Sequenznummer vergeben und wird mit jedem neuen Datenpaket, das zur Feldbus-Schnittstelle übertragen wird, inkrementiert. Auch der Zeitstempel kann schon eingetragen werden. Er kann alternativ auch jeweils bei Ausgabe des Datenpaketes auf den Feldbus von der Feldbus-Schnittstelle 15 aktualisiert werden.

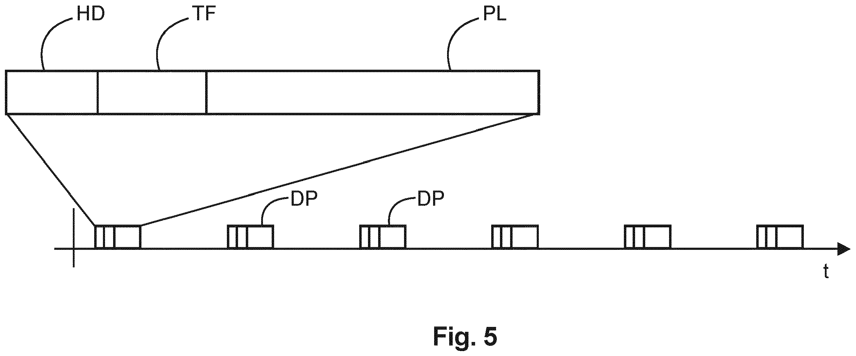

Die Fig. 5 zeigt den Aufbau der Datenpakete DP. Im ersten Abschnitt des Paketformates, dem Kopfteil HD, stehen die Management-Daten, also z.B. die Ziel- und Absender-Adressen. Im mittleren Abschnitt, dem Transportteildatenfeld TF, stehen der Zeitstempel und die Paketnummer. Anschließend folgt das eigentliche Nutzdatenfeld mit den Datenworten. Es können z.B. 8 Datenworte im Nutzdatenfeld PL stehen. Der zeitliche Abstand zwischen den Datenpaketen ist ebenfalls dargestellt.

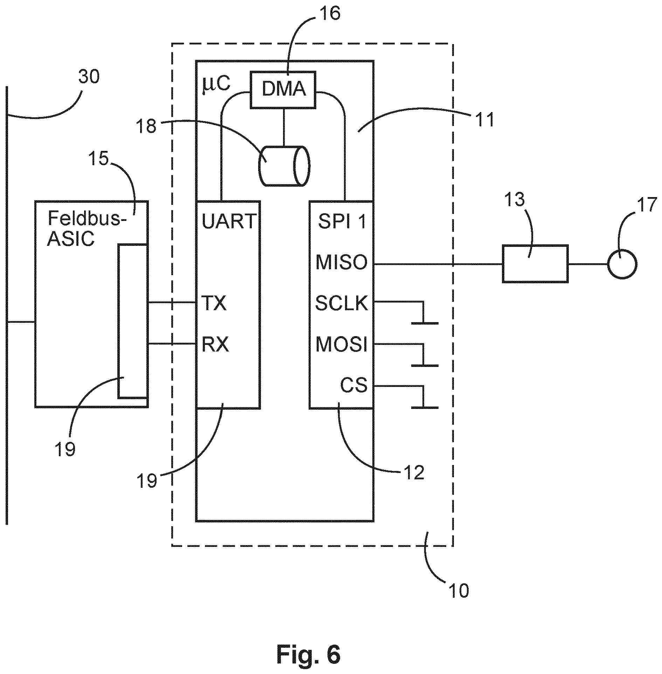

In der Fig. 6 ist noch ein zweites Ausführungsbeispiel für die erfindungsgemäße Realisierung der CPU-schonenden E/A-Operation mit einem Standard-Mikrocontroller dargestellt. Dabei bezeichnen die gleichen Bezugszeichen die gleichen Komponenten wie in Fig. 3. Ein Unterschied besteht darin, dass bei dem Mikrocontroller 11 nicht eine zweite SPI-Schnittstelle zur Ausgabe der eingelesenen Datenworte an die Feldbus-Schnittstelle 15 eingesetzt wird, sondern eine andere serielle oder parallele Busschnittstelle. Dargestellt ist, dass eine serielle Schnittstelle in Form einer UART-Schnittstelle dafür eingesetzt wird. In dem Baustein 15 für die Feldbus-Schnittstelle wird dementsprechend ein UART-Baustein 19 eingesetzt, der über z.B. die TX- und RX-Leitung mit dem UART-Baustein 19 verbunden ist.

Bei weiteren Ausführungsbeispielen könnten andere serielle oder parallele Schnittstellen eingesetzt werden. Als Beispiele werden erwähnt eine USART-Schnittstelle, eine RS232-Schnittstelle, eine 12C-Schnittstelle, eine USB-Schnittstelle, oder eine Firewire-Schnittstelle.

Es sollte verstanden werden, dass der vorgeschlagene beispielhafte Gebrauch und die zugehörigen Vorrichtungen in verschiedenen Formen von Hardware, Software, Firmware, Spezialprozessoren oder einer Kombination davon implementiert werden können. In einer bevorzugten Variante werden Mikrocontroller mit integriertem RAM-Speicher und integrierten I/O-Schnittstellen eingesetzt. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

**Bezugszeichenliste**

| | |
|---|---|
| Ein-/Ausgabe-Einheit | 10 |
| Standard-Mikrocontroller | 11 |
| 1. SPI-Schnittstelle | 12 |
| Pegelanpassungsschaltung | 13 |
| 2. SPI-Schnittstelle | 14 |
| Feldbus-Schnittstelle | 15 |
| DMA-Controller | 16 |
| Dateneingang | 17 |
| Zwischenspeicher | 18 |
| UART-Schnittstelle | 19 |
| Steuerungs-Einheit | 20 |
| Feldbus | 30 |
| Standard-Mikrocontroller | 100 |
| CPU | 110 |
| Timer-Baustein | 112 |
| Echtzeituhr-Baustein | 114 |
| Überwachungsschaltung | 116 |
| Interrupt-Controller | 118 |
| Co-Prozessor | 120 |
| Serielle Schnittstelle | 122 |
| GPIO-Ports | 124 |
| SPI-Schnittstelle | 126 |
| 12C-Schnittstelle | 128 |
| Debugging-Einheit | 130 |
| Spannungsversorgungseinheit | 132 |
| Systembus | 134 |
| externer Speicher | 140 |
| Feldbus-Schnittstelle | 150 |
| Auswahl-Pin | CS |
| Datenpaket | DP |
| Kopfteil | HD |
| Transportteildatenfeld | TF |
| Nutzdatenfeld | PL |

## Patentansprüche

1. Ein-/Ausgabe-Einheit (10) zur Datenerfassung bei einem Feldbussystem, mit einem Mikrocontroller, der wenigstens eine integrierte synchrone, serielle Busschnittstelle (12, 14) und eine Steuereinheit (16) für einen Speicherdirektzugriff aufweist,
**dadurch gekennzeichnet,**
**dass** an einen digitalen Dateneingang (MISO) einer ersten synchronen, seriellen Busschnittstelle (12) der wenigstens einen integrierten synchronen, seriellen Busschnittstelle (12, 14) eine Signalquelle (17) für ein Digitalsignal anschließbar ist,
**dass** die erste synchrone, serielle Busschnittstelle (12) ausgebildet ist, das an dem Dateneingang (MISO) anstehende Digitalsignal mit einer ersten Taktrate einzulesen, die einer Datenübertragungsrate der ersten synchronen, seriellen Busschnittstelle (12) entspricht, wobei die wenigstens eine synchrone, serielle Busschnittstelle (12) von einem Typ einer SPI-Schnittstelle ist, entsprechend Serial Peripheral Interface,
**dass** die Steuereinheit (16) für den Speicherdirektzugriff ausgebildet ist, die eingelesenen Digitalsignale als Datenworte an einen Zwischenspeicher (18) weiterzuleiten, und von Zeit zu Zeit von dem Zwischenspeicher (18) abzuholen, und an eine zweite synchrone, serielle Busschnittstelle (14) der wenigstens einen integrierten synchronen, seriellen Busschnittstelle (12, 14) oder an eine andere Busschnittstelle (19) weiterzuleiten, wobei die zweite (14) oder die andere Busschnittstelle (19) an eine Feldbus-Schnittstelle (15) anschließbar ist, und ausgebildet ist, die Datenworte mit einer höheren Taktrate als der ersten Taktrate bei der Datenerfassung durch die erste synchrone, serielle Schnittstelle (12) an die Feldbus-Schnittstelle (15) auszugeben.

2. Ein-/Ausgabe-Einheit (10) nach Anspruch 1, wobei die Datenworte von dem Zwischenspeicher (18) paketweise abgeholt werden.

3. Ein-/Ausgabe-Einheit (10) nach Anspruch 1 oder 2, wobei die Signalquelle (17) an einen MISO-Eingang (MISO), entsprechend Master In, Slave Out der SPI-Schnittstelle (12) anschließbar ist und die Ausgänge SCLK, MOSI und CS, entsprechend Serial Clock, Master Out - Slave In und Chip Select der SPI-Schnittstelle (12), nicht angeschlossen sind oder an Masse gelegt werden können.

4. Ein-/Ausgabe-Einheit (10) nach einem der Ansprüche 1 bis 3, wobei die zweite Taktrate wenigstens um solch einen Faktor höher als die erste Taktrate ist, dass sie einem Vielfachen der Taktrate der ersten Taktrate entspricht, wobei das Vielfache durch die Wortlänge der Datenworte bestimmt ist.

5. Ein-/Ausgabe-Einheit (10) nach Anspruch 3, wobei das Chip-Select-Signal statt an Masse gelegt oder nicht angeschlossen, zur Auswahl einer oder mehrerer weiterer SPI-Schnittstellen aus einer Anzahl von SPI-Schnittstellen dient, bei denen die an dem Dateneingang (MISO) anstehenden Daten mit der ersten Taktrate eingelesen und an den Zwischenspeicher (18) weitergeleitet werden.

6. Ein-/Ausgabe-Einheit (10) nach einem der vorhergehenden Ansprüche, wobei von der Ein-/Ausgabe-Einheit (10) erzeugte Datenpakete ein Übertragungsformat aufweisen mit einem Kopfteil (HD), einem Transportteildatenfeld (TF) und mit einem Nutzdatenfeld (PL), wobei in dem Kopfteil (HD) Adressinformationen enthalten sind, in dem Transportteildatenfeld (TF) eine Sequenznummer und/oder ein Zeitstempel und in dem Nutzdatenfeld (PL) eine Anzahl der in dem Datenpaket zusammengestellten Datenworte.

7. Ein-/Ausgabe-Einheit (10) nach einem der vorhergehenden Ansprüche, wobei die andere Busschnittstelle (19) eine Busschnittstelle vom Typ einer UART, USART, I2C oder USB-Schnittstelle ist.

## Claims

1. An input/output unit (10) for data acquisition in a field bus system, having a microcontroller which has at least one integrated synchronous serial bus interface (12, 14) and a control unit (16) for direct memory access,
**characterized**
**in that** a signal source (17) for a digital signal can be connected to a digital data input (MISO) of a first synchronous, serial bus interface (12) of the at least one integrated synchronous, serial bus interface (12, 14),
**in that** the first synchronous, serial bus interface (12) is configured to read in the digital signal present at the data input (MISO) at a first clock rate which corresponds to a data transmission rate of the first synchronous, serial bus interface (12), the at least one synchronous, serial bus interface (12) being of a type of SPI interface, corresponding to Serial Peripheral Interface,
**in that** the control unit (16) for direct memory access is configured to forward the read-in digital signals as data words to a buffer memory (18), and to fetch them from the buffer memory (18) from time to time, and to forward them to a second synchronous serial bus interface (14) of the at least one integrated synchronous serial bus interface (12, 14) or to another bus interface (19), wherein the second (14) or the other bus interface (19) can be connected to a fieldbus interface (15) and is configured to output the data words to the fieldbus interface (15) at a higher clock rate than the first clock rate during data acquisition by the first synchronous serial interface (12).

2. The input/output unit (10) according to claim 1, wherein the data words are fetched from the buffer (18) in packets.

3. The input/output unit (10) according to claim 1 or 2, wherein the signal source (17) can be connected to a MISO input (MISO), corresponding to Master In, Slave Out of the SPI interface (12), and the outputs SCLK, MOSI and CS, corresponding to Serial Clock, Master Out - Slave In and Chip Select of the SPI interface (12), are not connected or can be connected to ground.

4. The input/output unit (10) according to one of claims 1 to 3, wherein the second clock rate is higher than the first clock rate by at least such a factor that it corresponds to a multiple of the clock rate of the first clock rate, wherein the multiple is determined by the word length of the data words.

5. The input/output unit (10) according to claim 3, wherein the chip select signal, instead of being connected to ground or not connected, is used to select one or more further SPI interfaces from a number of SPI interfaces, in which the data present at the data input (MISO) is read in at the first clock rate and forwarded to the buffer (18).

6. The input/output unit (10) according to one of the preceding claims, wherein data packets generated by the input/output unit (10) have a transmission format with a header part (HD), a transport part data field (TF) and with a user data field (PL), wherein address information is contained in the header part (HD), a sequence number and/or a time stamp in the transport part data field (TF) and a number of the data words compiled in the data packet in the user data field (PL).

7. The input/output unit (10) according to one of the preceding claims, wherein the other bus interface (19) is a bus interface of the type of a UART, USART, I2C or USB interface.

## Revendications

1. Unité d'entrée/sortie (10) pour l'acquisition de données dans un système de bus de terrain, avec un microcontrôleur qui présente au moins une interface de bus sérielle synchrone intégrée (12, 14) et une unité de commande (16) pour un accès direct à la mémoire,
**caractérisée**
**en ce qu'**une source de signal (17) pour un signal numérique peut être raccordée à une entrée de données numériques (MISO) d'une première interface de bus série synchrone (12) de l'au moins une interface de bus série synchrone intégrée (12, 14),
**en ce que** la première interface de bus série synchrone (12) est conçue pour lire le signal numérique présent à l'entrée de données (MISO) à une première fréquence d'horloge qui correspond à un taux de transmission de données de la première interface de bus série synchrone (12), l'au moins une interface de bus série synchrone (12) étant d'un type d'interface SPI, correspondant à Serial Peripheral Interface,
**en ce que** l'unité de commande (16) pour l'accès direct à la mémoire est conçue pour transmettre les signaux numériques lus sous forme de mots de données à une mémoire intermédiaire (18) et pour les récupérer de temps en temps dans la mémoire intermédiaire (18), et pour les transmettre à une deuxième interface de bus série synchrone (14) de l'au moins une interface de bus série synchrone intégrée (12, 14) ou à une autre interface de bus (19), la deuxième interface de bus (14) ou l'autre interface de bus (19) pouvant être raccordée à une interface de bus de terrain (15) et étant conçue pour délivrer les mots de données à l'interface de bus de terrain (15) à une fréquence d'horloge supérieure à la première fréquence d'horloge lors de la saisie des données par la première interface sérielle synchrone (12).

2. Unité d'entrée/sortie (10) selon la revendication 1, dans laquelle les mots de données sont récupérés par paquets à partir de la mémoire tampon (18).

3. Unité d'entrée/sortie (10) selon la revendication 1 ou 2, dans laquelle la source de signaux (17) peut être raccordée à une entrée MISO (MISO), correspondant à Master In, Slave Out de l'interface SPI (12), et les sorties SCLK, MOSI et CS, correspondant à Serial Clock, Master Out - Slave In et Chip Select de l'interface SPI (12), ne sont pas raccordées ou peuvent être mises à la masse.

4. Unité d'entrée/sortie (10) selon l'une des revendications 1 à 3, la deuxième fréquence d'horloge étant supérieure à la première fréquence d'horloge au moins d'un facteur tel qu'elle correspond à un multiple de la fréquence d'horloge de la première fréquence d'horloge, le multiple étant déterminé par la longueur de mot des mots de données.

5. Unité d'entrée/sortie (10) selon la revendication 3, dans laquelle le signal de sélection de puce, au lieu d'être mis à la masse ou non connecté, sert à sélectionner une ou plusieurs autres interfaces SPI parmi un certain nombre d'interfaces SPI, dans lesquelles les données présentes à l'entrée de données (MISO) sont lues à la première fréquence d'horloge et transmises à la mémoire tampon (18).

6. Unité d'entrée/sortie (10) selon l'une des revendications précédentes, dans laquelle des paquets de données générés par l'unité d'entrée/sortie (10) présentent un format de transmission avec une partie d'en-tête (HD), un champ de données de partie de transport (TF) et un champ de données utiles (PL), des informations d'adresse étant contenues dans la partie d'en-tête (HD), un numéro de séquence et/ou un horodatage étant contenus dans le champ de données de partie de transport (TF) et un nombre de mots de données assemblés dans le paquet de données étant contenus dans le champ de données utiles (PL).

7. Unité d'entrée/sortie (10) selon l'une quelconque des revendications précédentes, dans laquelle l'autre interface de bus (19) est une interface de bus de type UART, USART, I2C ou USB.
